# EUROPÄISCHE PATENTSCHRIFT

(11) **EP 0 707 708 B1**
(45) Veröffentlichungstag und Bekanntmachung des Hinweises auf die Patenterteilung: **27.05.1998**
(21) Anmeldenummer: 94911083.7
(22) Anmeldetag: 28.03.1994
(51) Int. Cl.: G01K 7/01

(54) **TEMPERATURSENSOR MIT EINEM P-N-ÜBERGANG**
TEMPERATURE SENSOR WITH A P-N JUNCTION
CAPTEUR DE TEMPERATURE COMPORTANT UNE JONCTION P-N

(30) Priorität: 07.07.1993 DE 4322650
(43) Veröffentlichungstag der Anmeldung: 24.04.1996
(73) Patentinhaber: SIEMENS AKTIENGESELLSCHAFT, 80333 München (DE)
(72) Erfinder: RUPP, Roland, D-91207 Lauf (DE)
(86) Internationale Anmeldenummer: DE9400347
(87) Internationale Veröffentlichungsnummer: WO9502172

(56) Entgegenhaltungen:
- US-A- 5 154 514
- PATENT ABSTRACTS OF JAPAN vol. 10, no. 145 (E-407) (2202) 28. Mai 1986 & JP,A,61 006 881 (TOUHOKU KINZOKU KOGYO K.K.) 13. Januar 1986
- PATENT ABSTRACTS OF JAPAN vol. 7, no. 64 (P-183) (1209) 17. März 1983 & JP,A,57 207 834 (SHINNIHON MUSEN K.K.) 20. Dezember 1982
- PATENT ABSTRACTS OF JAPAN vol. 12, no. 228 (E-627) 28. Juni 1988 & JP,A,63 019 869 (FUJITSU LTD.) 27. Januar 1988

## Beschreibung

Die Erfindung betrifft einen Temperatursensor.

Die elektronischen Eigenschaften von Halbleiterbauelementen wie beispielsweise die Ladungsträgerkonzentration und deren Beweglichkeit sind im allgemeinen temperaturabhängig. Soll das Bauelement in einem weiten Temperaturbereich eingesetzt werden, so kann eine meßtechnische Kompensation der Temperatureinflüsse erforderlich sein. Zur Temperaturkompensation muß die Temperatur an dem Bauelement mit einem Temperatursensor gemessen werden. Dieser Temperatursensor sollte nun möglichst nahe an dem Bauelement angeordnet sein und vorzugsweise zusammen mit dem Bauelement auf einem Halbleiterchip integriert sein, um die thermischen Übergangswiderstände zwischen Bauelement und Temperatursensor möglichst gering zu halten.

Bekannte Temperatursensoren sind temperaturabhängige Widerstände (Thermistoren) und Thermoelemente. Beide Sensortypen können mit Hilfe der Dünnfilmtechnik als dünne Metallfilme auf dem Halbleiterbauelement integriert werden. Ein Problem ist die Temperaturmessung in der Hochtemperatur- und der Leistungselektronik wegen der dort auftretenden hohen Einsatztemperaturen bzw. der hohen Temperaturen infolge der thermischen Verlustleistung. Bei Temperaturen von beispielsweise etwa 400°C sind nämlich die bekannten Sensorfilme aufgrund metallurgischer Veränderungen nur eingeschränkt einsatzfähig. In den Thermistorfilmen kommt es zu Widerstandsänderungen wegen Kornwachstumsprozessen und in den Thermoelementfilmen zu Veränderungen des Kontaktmaterials infolge von Diffusionsprozessen.

Darüber hinaus sind weitere Temperatursensoren bekannt, die sich zur Temperaturmessung die thermischen Eigenschaften von Halbleiterstrukturen zu Nutze machen. Bei den verwendeten Halbleiterstrukturen wird bei Anliegen einer Spannung an dieser Struktur eine Schwellenspannung definiert durch den Spannungswert, bei dem ein nennenswerter Stromfluß durch die Halbleiterstruktur einsetzt. Der Temperaturgang dieser Schwellenspannung wird dann als Maß für die Temperatur herangezogen. So ist aus US-A-5 154 514 ein Temperatursensor mit einer Schottky-Diodenstruktur bekannt. Der Schottky-Kontakt wird gebildet durch eine Titanoxidschicht und eine angrenzende Titansiliciumschicht. Als Maß für die Temperatur wird die Schwellenspannung der Schottky-Diode bestimmt. Eine weitere Ausführung eines Temperatursensors ist aus JP-A-57207834 bekannt. Bei einer MOS-FET-Struktur des Verarmungstyps wird eine zwischen Gate und Source der Struktur anliegende Spannung, bei der der Stromfluß durch den durch die Gateelektrode definierten Kanal gerade einsetzt, als Maß für die Temperatur des MOS-FET's bestimmt. Ein gemeinsames Merkmal dieser Verfahren ist, daß zusätzlich zu einer Meßelektronik auch noch eine Regelelektronik zur Ermittlung der Schwellenspannung erforderlich ist.

Ein für den Einsatz bei hohen Temperaturen bis zu wenigstens 800°C und bei hohen Leistungen geeignetes Halbleitermaterial ist Siliciumcarbid (SiC). SiC zeichnet sich durch eine niedrige Eigenladungsträgerkonzentration, hohe Durchbruchfeldstärke, hohe Wärmeleitfähigkeit sowie thermische und chemische Beständigkeit aus. Es sind bereits einige Bauelemente auf SiC-Basis realisiert worden, darunter insbesondere ein JFET (Junction-Field-Effect-Transistor), MESFET (MEtall-Oxide-Semiconductor-Field-Effect-Transistor) und ein MOSFET (Metal-Oxide-Semiconductor-Field-Effect-Transistor). Bei diesen SiC-Bauelementen ist eine Temperaturabhängigkeit ihrer elektronischen Eigenschaften festzustellen, die auf die Temperaturabhängigkeit der Ladungsträgerkonzentrationen und der Ladungsträgerbeweglichkeiten zurückzuführen ist ("Diamond and Related Materials", Band I (1992), Seiten 109 bis 120, Elsevier Science Publishers, Amsterdam).

Der Erfindung liegt nun die Aufgabe zugrunde, einen Temperatursensor anzugeben, der auch zur Messung hoher Temperaturen von wenigstens 400°C einsetzbar ist und insbesondere zur Temperaturkontrolle und -kompensation eines Halbleiterbauelements mit diesem Bauelement auf einem Substrat monolithisch integriert werden kann.

Diese Aufgabe wird erfindungsgemäß gelöst mit den Merkmalen des Anspruchs 1.

Die Erfindung beruht auf der Überlegung, sich die Temperaturabhängigkeit der Raumladungszone eines p-n-Übergangs zum Aufbau eines Temperatursensors zunutzezumachen. Dieser p-n-Übergang ist mit zwei entgegengesetzt dotierten Halbleitern mit einem Bandabstand von mehr als 2 eV gebildet.

Dadurch kann der Meßbereich auf Temperaturen von wenigstens 400°C erweitert werden.

Vorteilhafte Ausgestaltungen gemäß der Erfindung ergeben sich aus den Unteransprüchen.

Zur weiteren Erläuterung der Erfindung wird auf die Zeichnung Bezug genommen, in deren
- FIG. 1: eine Ausführungsform eines Temperatursensors mit einem p-n-Übergang und einem horizontalen Kanal,
- FIG. 2 und 3: eine Ausführungsform mit mehreren p-n-Übergängen und vertikalen Kanälen in einer aufgeschnittenen perspektivischen Darstellung bzw. in einer Draufsicht und
- FIG. 4: eine Ausführungsform mit zwei p-n-Übergängen im Querschnitt
schematisch dargestellt sind. Einander entsprechende Teile sind mit denselben Bezugszeichen versehen.

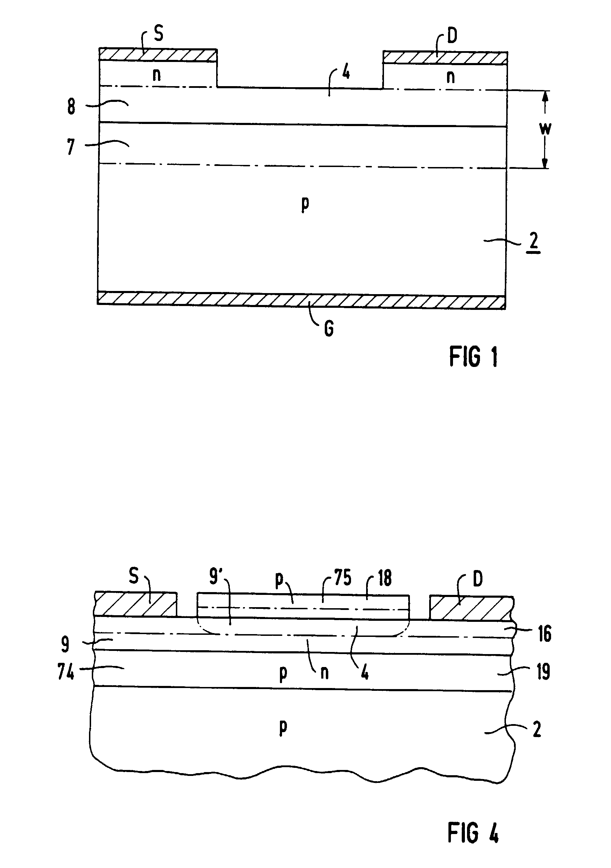

In der FIG. 1 sind ein Substrat aus einem p-leitenden Halbleiter mit einem Bandabstand zwischen Valenzband und Leitungsband größer als 2 eV mit 2, ein n-dotiertes Gebiet in oder auf dem Substrat 2 mit 4, ein mit dem Substrat 2 gebildetes p-dotiertes Gebiet mit 7, die Raumladungszone eines mit dem n-Gebiet 4 und dem p-Gebiet 7 gebildeten p-n-Übergangs mit 8 und eine Source-Elektrode mit S sowie eine Drain-Elektrode mit D bezeichnet. Das Gebiet 4 ist wenigstens teilweise als horizontaler Kanal ausgebildet, der die Source-Elektrode S und die Drain-Elektrode D verbindet.

Der p-n-Übergang ist so ausgelegt, daß seine intrinsische Raumladungszone 8 bei einer vorgegebenen Referenztemperatur T_{ref}, die üblicherweise Raumtemperatur (21°C) ist, gerade den gesamten Kanal überdeckt. Dazu sind insbesondere die Built-in-Spannung und die Donator- und Akzeptorkonzentration des p-n-Übergangs einzustellen. Damit ist der Kanal bei dieser Referenztemperatur T_{ref} sperrend (normally-off), und es fließt bei Anlegen einer Spannung zwischen Source-Elektrode S und Drain-Elektrode D nur ein vernachlässigbarer Leckstrom I_{SD} zwischen diesen beiden Elektroden S und D. Die angelegte Source-Drain-Spannung darf dabei natürlich nicht die Durchbruchspannung des p-n-Übergangs überschreiten. Bei höheren Temperaturen T > T_{ref} öffnet sich der Kanal mehr und mehr, da mit steigender Temperatur die Breite w der Raumladungszone 8 des p-n-Übergangs monoton abnimmt. Der Source-Drain-Strom I_{SD} ist somit eindeutig von der Temperatur T abhängig und kann daher als Meßsignal des Temperatursensors ausgewertet werden.

Vorzugsweise wird die Source-Drain-Spannung so eingestellt, daß der Source-Drain-Strom I_{SD} seinen Sättigungsstromwert erreicht. Der Sättigungsstrom ist dabei als der maximale Source-Drain-Strom definiert, der auch bei einer weiteren Steigerung der Source-Drain-Spannung praktisch nicht mehr größer wird.

Der Meßbereich dieses Temperatursensors reicht von der Referenztemperatur T_{ref}, bei der die Raumladungszone 8 gerade den gesamten Kanal sperrt, bis zu einer maximalen Temperatur Tₘₐₓ, ab der der Kanal ganz geöffnet ist und der Source-Drain Strom I_{SD} praktisch nicht mehr weiter ansteigt oder ab der der p-n-Übergang durch thermisch generierte Ladungsträger seine gleichrichtende Charakteristik verliert.

Es kann allerdings auch der Source-Drain-Strom I_{SD} konstant gehalten werden und die Spannungsänderung gemessen werden, die durch die Veränderung des stromtragenden Bereichs im Gebiet 4 und die damit verbundene Widerstandsänderung hervorgerufen wird.

Der p-n-Übergang kann auch mit einem p-leitenden Gebiet 4 und einem n-leitenden Gebiet 7 gebildet sein. Außerdem kann zwischen dem Gebiet 4 und dem Substrat 2 eine zusätzliche Schicht als Gebiet 7 angeordnet sein. Der p-n-Übergang wird dann von dieser Schicht und dem Gebiet 4 gebildet.

Die Größe der Raumladungszone 8 kann zusätzlich durch Anlegen einer Gatespannung an eine Gate-Elektrode G gesteuert werden. Damit kann die Meßempfindlichkeit des Temperatursensor und sein Arbeitspunkt in Abhängigkeit von der Gatespannung an der Gate-Elektrode G eingestellt werden. Diese Gate-Elektrode G kann beispielsweise auf der von der Seite mit der Source-Elektrode S und der Drain-Elektrode D abgewandten Seite des Substrats 2 angeordnet sein. Eine oder auch mehrere Gate-Elektroden können auch bei allen anderen Ausführungsformen vorgesehen sein.

Alle dotierten Gebiete und das Substrat 2 bestehen jeweils aus einem Halbleitermaterial mit einem Bandabstand größer als 2 eV und vorzugsweise aus dem gleichen Halbleitermaterial. Wegen des im Vergleich zu Silicium (1,1 eV) hohen Bandabstandes der für den Temperatursensor nach der Erfindung zu wählenden Halbleiter ist der Temperatursensor für hohe Einsatztemperaturen von wenigstens 400°C geeignet. Beispiele für solche Halbleiter sind Diamant, AlN, GaN oder auch InN. Vorzugsweise ist als Halbleiter wegen seiner hervorragenden thermischen und elektronischen Eigenschaften SiC vorgesehen. Die Ladungsträgerkonzentration für Eigenleitung liegt bei diesem Material SiC auch bei 800°C noch unter dem kritischen Wert von etwa 10¹³ cm⁻³, bei dem der Kanal nicht mehr ausreichend sperren kann.

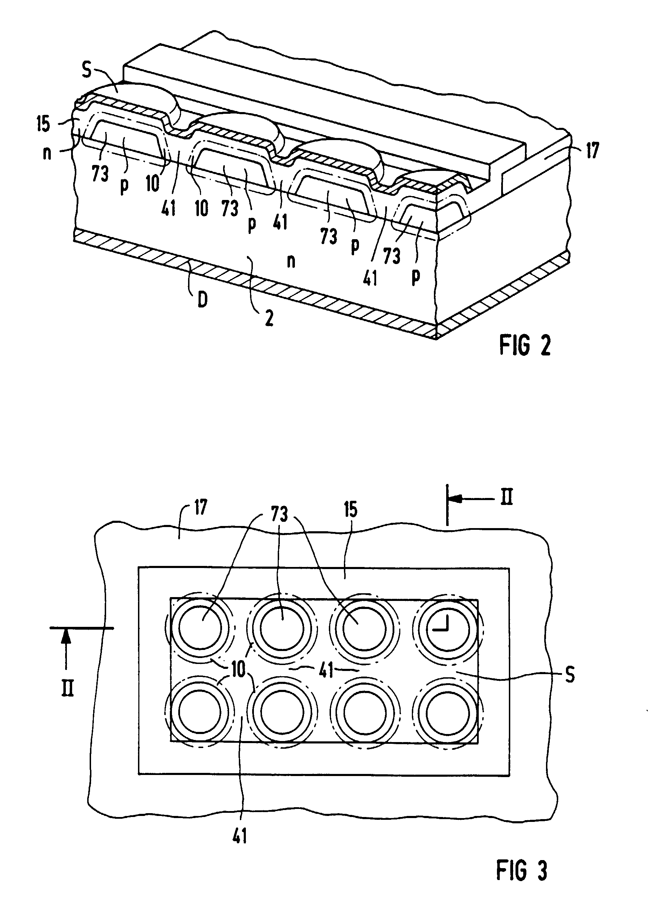

In einer in FIG. 2 in einer aufgeschnittenen perspektivischen Darstellung und in FIG. 3 in einer Draufsicht dargestellten Ausführungsform sind eine Source-Elektrode S auf einer Seite und eine Drain-Elektrode D auf einer gegenüberliegenden Seite eines n-leitenden Substrats 2 angeordnet. Auf dem Substrat 2 ist eine p-leitende Schicht 17 angeordnet. Aus dieser Schicht 17 sind beispielsweise kreisförmige p-Gebiete 73 als Mesa-Strukturen herausstrukturiert. Über diesen p-Gebieten 73 und den dazwischenliegenden Oberflächenbereichen des Substrats 2 ist eine n-leitende und vorzugsweise ebenfalls strukturierte Schicht 15 angeordnet. Auf dieser n-Schicht 15 ist eine strukturierte Schicht als Source-Elektrode S angeordnet. Diese Schicht und die beiden Schichten 15 und 17 werden vorzugsweise epitaktisch aufgewachsen. Die p-Gebiete 73 können auch in Form von Wannen in das Substrat 2 implantiert sein. Die n-Schicht 15 und die darauf aufgebrachten Source-Elektroden S sind dann im wesentlichen planar.

Die Source-Elektrode S ist mit der Drain-Elektrode D jeweils über ein Gebiet 41 verbunden, das mit dem n-leitenden Substrat 2 und der darauf angeordneten n-Schicht 15 gebildet und durch die Raumladungszonen 10 der p-n-Übergänge zwischen den p-Gebieten 73 und dem n-Substrat 2 bzw. der n-Schicht 15 als stromführender Kanal verengt ist. Dieser Kanal ist bei einer vorgegebenen Referenztemperatur T_{ref} wieder gerade gesperrt, bei der sich die beiden Raumladungszonen 10 um benachbarte p-Gebiete 73 berühren. Bei höheren Temperaturen T > T_{ref} weichen die Raumladungszonen 10 zurück und in dem sich öffnenden Kanal fließt ein Source-Drain-Strom I_{SD}. Die Stromrichtung dieses Stromes I_{SD} ist im wesentlichen vertikal zu den Oberflächen des Substrats 2 mit den Elektroden S bzw. D gerichtet.

Es können auch ein p-leitendes Substrat 2, eine p-leitende Schicht 15 und n-leitende Gebiete 73 vorgesehen sein, mit denen die p-n-Übergänge gebildet werden.

Außerdem kann auf der freiliegenden Oberfläche der p-Schicht 17 ein Gate-Kontakt ausgebildet sein.

FIG. 4 zeigt eine vorteilhafte Ausführungsform eines Temperatursensors im Querschnitt. Es ist ein p-leitendes Substrat 2 vorgesehen. Auf einer Oberfläche dieses Substrats 2 ist eine n-leitende Schicht 16 angeordnet. Vorzugsweise ist zwischen dem Substrat 2 und der n-leitenden Schicht 16 noch eine p-leitende Schicht 19 vorgesehen. Beide Schichten 16 und 19 können epitaktisch aufgewachsen werden. Auf der n-leitenden Schicht 16 sind eine Source-Elektrode S und eine Drain-Elektrode D angeordnet. Zwischen den beiden Elektroden S und D ist auf der n-Schicht 16 eine p-leitende Schicht 18 aufgebracht. Mit der n-Schicht 16 wird das die Source-Elektrode S und die Drain-Elektrode D verbindende Gebiet 4 als stromführender Kanal gebildet. Dieses Gebiet 4 wird von der Raumladungszone 9 des zwischen einem mit der p-Schicht 19 gebildeten p-Gebiets 74 und dem n-Gebiet 4 liegenden p-n-Übergangs und von der Raumladungszone 9' des zwischen einem mit der p-Schicht 18 gebildeten p-Gebiet 75 und dem n-Gebiet 4 liegenden p-n-Übergangs nach oben bzw. unten begrenzt. In der dargestellten Ausführungsform berühren sich die beiden Raumladungszonen 9 und 9', so daß der Kanal bei der entsprechenden Referenztemperatur T_{ref} wieder gesperrt ist. Der Source-Drain-Strom I_{SD} ist nun wieder abhängig von der Temperatur T > T_{ref}.

Auch hier können die Dotierungen wieder vertauscht werden, so daß n-leitende Gebiete zu p-leitenden werden und umgekehrt. Die dotierten Gebiete können mit verschiedenen Halbleitermaterialien oder mit dem gleichen Halbleitermaterial gebildet sein.

Zur Temperaturkompensation für ein Leistungs- oder Hochtemperatur-Halbleiterbauelement auf Silizium(Si)- oder SiC-Basis wird der Temperatursensor vorzugsweise mit dem Bauelement auf einem Halbleitersubstrat integriert. Dabei kann das Halbleitersubstrat auch aus Si bestehen, wenn das Substrat für den Temperatursensor nur tragende Funktion hat und die für den p-n-Übergang des Sensors erforderlichen dotierten Gebiete nicht mit dem Substrat gebildet sind. Die einzelnen Prozeßschritte zur Herstellung des Temperatursensors sind mit den Prozeßschritten für das Bauelement kompatibel. Außerdem erreicht man eine sehr gute thermische Kopplung des Temperatursensors und des Bauelements.

## Patentansprüche

1. Temperatursensor mit folgenden Merkmalen:
a) es sind ein erstes Gebiet (4) aus einem ersten Halbleitermaterial mit einem Bandabstand größer als 2 eV und vorgegebener Dotierung und ein zweites Gebiet (7) aus einem zweiten Halbleitermaterial mit einem Bandabstand größer als 2 eV und entgegengesetzter Dotierung vorgesehen;
b) mit diesen beiden entgegengesetzt cctierten Gebieten (4 und 7) ist ein p-n-Übergang gebildet;
c) es sind eine Source-Elektrode (S) und eine Drain-Elektrode (D) vorgesehen, die über das erste Gebiet (4) miteinander verbunden sind;
d) als Meßsignal für die zu messende Temperatur ist zwischen der Source-Elektrode (S) und der Drain-Elektrode (D) bei Anlegen einer vorgegebenen Source-Drain-Spannung ein Stromsignal (I_{SD}) cder bei Anlegen eines vorgegebenen Source-Drain-Stromes ein Spannungssignal abzugreifen, das jeweils von der Größe einer Raumladungszone (8) des p-n-Übergangs und damit von der zu messenden Temperatur abhängt.

2. Temperatursensor nach Anspruch 1, bei dem als erstes und/oder zweites Halbleitermaterial Siliciumcarbid (SiC) vorgesehen ist.

3. Temperatursensor nach Anspruch 1 oder Anspruch 2, bei dem zum Einstellen der Meßempfindlichkeit eine zusätzliche Gate-Elektrode (G) vorgesehen ist.

4. Temperatursensor nach einem der vorhergehenden Ansprüche, bei dem das zweite Gebiet (7) mit einem Substrat (2) und das erste Gebiet (4) mit einer auf diesem Substrat (2) angeordneten dotierten Schicht gebildet sind.

5. Temperatursensor nach einem der Ansprüche 1 bis 3, bei dem das erste Gebiet (4) mit einer wenigstens teilweise auf einem Substrat (2) angeordneten ersten dotierten Schicht (15, 16) gebildet ist.

6. Temperatursensor nach Anspruch 5, bei dem das zweite Gebiet (7) zwischen dem Substrat (2) und der ersten dotierten Schicht (15, 16) angeordnet ist.

7. Temperatursensor nach einem der vorhergehenden Ansprüche, bei dem dem ersten Gebiet (4) mit erster Dotierung mehrere Gebiete (74, 75) entgegengesetzter Dotierung unter Ausbildung einer entsprechenden Anzahl von p-n-übergängen zugeordnet sind.

8. Temperatursensor nach einem der vorhergehenden Ansprüche, bei dem der Temperatursensor zum Messen der Temperatur eines Halbleiterbauelements mit diesem Halbleiterbauelement auf einem Substrat (2) integriert ist.

## Claims

1. Temperature sensor having the following features:
a) there are provided a first region (4) made of a first semiconductor material having a band gap greater than 2 eV and a specified doping, and a second region (7) made of a second semiconductor material having a band gap greater than 2 eV and opposite doping;
b) with these two oppositely doped regions (4 and 7), a p-n junction is formed;
c) there are provided a source electrode (S) and a drain electrode (D), which are connected to each other by way of the first region (4); and
d) as a measurement signal for the temperature to be measured, there is to be tapped between the source electrode (S) and the drain electrode (D) a current signal (I_{SD}), in the case of the application of a specified source-drain voltage, or a voltage signal, in the case of the application of a specified source-drain current, which signal depends in each case on the size of a space charge region (8) of the p-n junction and therefore on the temperature to be measured.

2. Temperature sensor according to claim 1, in which silicon carbide (SiC) is provided as first and/or second semiconductor material.

3. Temperature sensor according to claim 1 or claim 2, in which there is provided an additional gate electrode (G) for adjusting the measuring sensitivity.

4. Temperature sensor according to one of the preceding claims, in which the second region (7) is formed with a substrate (2) and the first region (4) is formed with a doped layer arranged on this substrate (2).

5. Temperature sensor according to one of claims 1 to 3, in which the first region (4) is formed with a first doped layer (15, 16) which is arranged at least partially on a substrate (2).

6. Temperature sensor according to claim 5, in which the second region (7) is arranged between the substrate (2) and the first doped layer (15, 16).

7. Temperature sensor according to one of the preceding claims, in which there are allocated to the first region (4) having a first doping a plurality of regions (74, 75) having opposite doping, forming a corresponding number of p-n junctions.

8. Temperature sensor according to one of the preceding claims, in which the temperature sensor for measuring the temperature of a semiconductor component is integrated with this semiconductor component on a substrate (2).

## Revendications

1. Capteur de température ayant les caractéristiques suivantes:
a) il est prévu une première zone (4) en un premier matériau semiconducteur. ayant un intervalle d'énergie entre les bandes supérieures à 2 eV et à dopage prescrit, et une deuxième zone (7) en un deuxième matériau semiconducteur, ayant un intervalle d'énergie entre les bandes supérieures à deux eV et à dopage opposé,
b) une jonction p-n est formée par ces deux zones (4 et 7) de dopage opposé;
c) il est prévu une électrode (S) de source et une électrode (D) de drain qui sont reliées l'une à l'autre par l'intermédiaire de la première zone (4);
d) on peut prélever comme signal de mesure pour la température à mesurer. entre l'électrode (S) de source et l'électrode (D) de drain, lors de l'application d'une tension source-drain prescrite, un signal (I_{SD}) de courant ou, lors de l'application d'un courant source-drain prescrit. un signal de tension, chacun de ces signaux étant fonction de la dimension d'une zone (8) de charge d'espace de la jonction p-n et donc de la température à mesurer.

2. Capteur de température suivant la revendication 1, dans lequel il est prévu comme premier et/ou deuxième matériau semiconducteur du carbure de silicium (SiC).

3. Capteur de température suivant la revendication 1 ou la revendication 2, dans lequel il est prévu une électrode (G) de grille supplémentaire pour régler la sensibilité de mesure.

4. Capteur de température suivant l'une des revendications précédentes, dans lequel la deuxième zone (7) est formée par un substrat (2) et la première zone (4) par une couche dopée disposée sur ce substrat (2).

5. Capteur de température suivant l'une des revendications 1 à 3, dans lequel la première zone (4) est formée par une première couche (15,16) dopée disposée au moins partiellement sur un substrat (2).

6. Capteur de température suivant la revendication 5. dans lequel la deuxième zone (7) est disposée entre le substrat (2) et la première couche (15,16) dopée.

7. Capteur de température suivant l'une des revendications précédentes, dans lequel il est associé à la première zone (4) ayant un premier dopage plusieurs zones (74,75) de dopage opposé. avec réalisation d'un nombre correspondant de jonctions p-n.

8. Capteur de température suivant l'une des revendications précédentes, dans lequel, pour mesurer la température d'un composant à semiconducteur, le capteur de température est intégré avec ce composant à semiconducteur à un substrat (2).
